(19) Europäisches Patentamt
European Patent Office
Office européen des brevets

(11) **EP 1 706 974 B1**

(12) **EUROPEAN PATENT SPECIFICATION**

(45) Date of publication and mention
of the grant of the patent:
**05.09.2007 Bulletin 2007/36**

(21) Application number: **03748157.9**

(22) Date of filing: **03.10.2003**

(51) Int Cl.:
**H04L 27/26** (2006.01)

(86) International application number:
**PCT/FI2003/000720**

(87) International publication number:
**WO 2005/034460 (14.04.2005 Gazette 2005/15)**

(54) **METHOD, SYSTEM AND RECEIVER FOR RECEIVING A MULTI-CARRIER TRANSMISSION**

VERFAHREN, SYSTEM UND EMPFÄNGER ZUM EMPFANGEN EINER MEHRTRÄGER-ÜBERTRAGUNG

PROCEDE, SYSTEME ET RECEPTEUR POUR RECEPTION D'EMISSION MULTI-VECTEUR

(84) Designated Contracting States:
**AT BE BG CH CY CZ DE DK EE ES FI FR GB GR HU IE IT LI LU MC NL PT RO SE SI SK TR**

(43) Date of publication of application:
**04.10.2006 Bulletin 2006/40**

(73) Proprietor: **Nokia Corporation**
**00045 Espoo (FI)**

(72) Inventor: **SCHWOERER, Ludwig**
**45525 Hattingen (DE)**

(74) Representative: **Brax, Matti Juhani**
**Berggren Oy Ab,**
**P.O. Box 16**
**00101 Helsinki (FI)**

(56) References cited:
**EP-A- 1 276 289**    **EP-A1- 0 915 597**
**EP-A2- 0 961 448**    **WO-A2-01/97478**
**US-B1- 6 359 938**

• **'Digital Video Broadcasting (DVB); Framing structure, channel coding and modulation for digital terrestial television' ETSI EN 300 744 V1.4.1, EUROPEAN STANDARD (TELECOMMUNICATIONS SERIES) January 2001, pages 1 - 49, XP002207124**

EP 1 706 974 B1

**Description**

**TECHNICAL FIELD OF THE INVENTION**

The present invention relates to a receiver, a mobile terminal, a sub-assembly, a chipset, a method, and a computer program for receiving a multi-carrier transmission.

**BACKGROUND ART**

Services used in mobile handheld terminals require relatively low bandwidth. Estimated maximum bitrate for streaming video using advanced compression like MPEG-4 is in order of a few hundred kilobits per second.

A DVB-T (Terrestrial Digital Video Broadcasting) transmission system usually provides data rates of 10 Mbps or more. This provides a possibility to significantly reduce the average DVB-T receiver power consumption by introducing a schema which can be based on time division multiplexing (TDM). The introduced scheme can be called a time slicing.

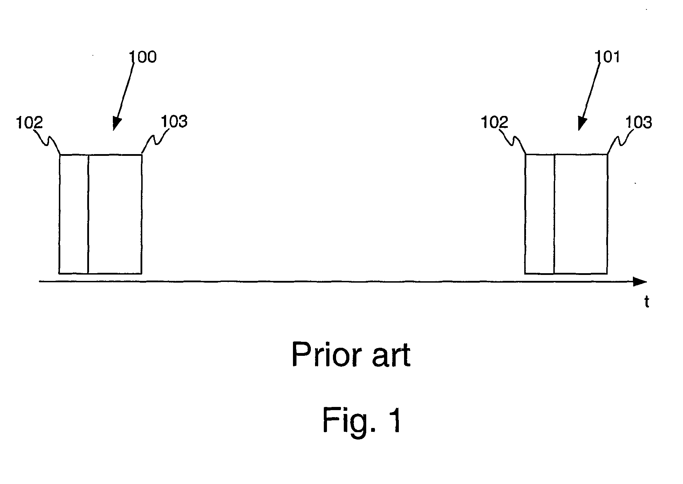

An idea of time-slicing is to send data in bursts using significantly high bandwidth at once. This enables a receiver to stay active only a fragment of the time, while receiving bursts of a requested service. An example of the time slicing can be depicted in Figure 1. So the original possibly streaming data can be sent as burst with high bandwidth load. Two time slice bursts (100,101) are depicted each burst having their respective synchronization portion (102) and data portion carrying the service (103).

The received data can be buffered. For example, if an applicable constant lower bitrate is required by the mobile handheld terminal, this may be provided by buffering the received bursts. Thus the data used by the end-application can be applied even as a stream by unpacking data in the buffer(s).

For an exemplary burst size of 2 Mbit and a DVB-T bitrate of 15 Mbps, the burst duration is 146 ms. If the constant bitrate (the bitrate at which the burst is read out of the buffer) is 350 kbps (e.g. one streaming service with high quality video), the average time between bursts is 6.1 s.

As the total on-time is the addition of the synchronization time plus the burst duration, synchronization times of the handheld receiver must be rigorously minimized in order to better exploit the potential of time-slicing.

So the technical use of TDM based system such as time slicing to cut power consumption to a reasonable number is generalizing for a DVB handheld environment. Therefore, in order to better exploit the potential power reduction, synchronization times of such a receiver should be decreased. A faster synchronization is desirable.

An approach for a multi-carrier transmission synchronization according to the prior art, will hereinafter be described.

**Typical DVB-T synchronization according to prior art**

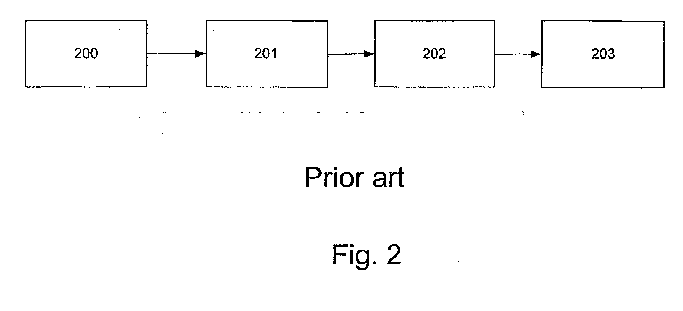

A typical DVB-T synchronization scheme until Channel Estimation is sketched a in a standardization publication: "Digital Video Broadcasting (DVB)", ETS 300 744, chapter 4.4. This typical synchronization scheme is depicted in Figure 2. After start-up, the first step of synchronization is a Pre-FFT (Fast Fourier Transform) synchronization (200). As all metrics at this stage are derived from a guard interval correlation, a typical synchronization time of two OFDM (Orthogonal Frequency Division Multiplex) symbols is inherent.

For Subsequent Post-FFT synchronization (201), taking into account, that the first OFDM symbol is available for Post-FFT synchronization after the latency of the FFT (typically 3 OFDM symbols) a typical synchronization time of 4 - 5 OFDM symbols is related to this phase.

After carrier and timing synchronization have been achieved, the position of scattered pilots within an OFDM symbol has to be determined before the channel estimation can be started. As the scattered pilot position is directly related to the OFDM symbol number within the OFDM frame, no dedicated scattered pilot synchronization is typically included in prior art DVB-T receivers, but the anyhow available TPS-bit-based OFDM frame synchronization (202) instead. As a consequence, this implies a variable minimum synchronization time of 17 to 68 OFDM symbols. For DVB-H (DVB in handheld mobile terminal environment) time-slicing purposes this means the receiver must prepare for the later one, thus 68 OFDM symbols synchronization time have to be reserved. All in all, this accounts for 75 OFDM symbols synchronization time until Channel Estimation (CHE, 203) can be started. Assuming 8k mode, this translates into 69 - 84 ms depending on the length of the guard interval. Taking only this part of the synchronization time (Channel Estimation omitted), already this 84 ms is quite impressive compared to 146 ms burst duration. 37 % of the total on-time is just for this part of the synchronization, most of it resulting from the TPS (Transmission Parameter Signalling) synchronization (202).

In view of various limitation of the synchronization into a multi-carrier transmission, it would be desirable to avoid or mitigate these and other problems associated with prior art. Thus, there is a need for fast synchronization.

## SUMMARY OF THE INVENTION

Now a receiver, a mobile terminal, a sub-assembly, a chipset, a method, a system and a computer program have been invented to generally fast synchronize into multi-carrier transmission or a portion of it.

In accordance with aspects of the invention, there is provided a receiver, a terminal, sub-assembly of a terminal, and a method for receiving a multi-carrier transmission, wherein the multi-carrier transmission comprises various symbols, each symbol comprising a plurality of carriers, comprising:

means and respective operations for accessing at least one symbol which is adapted to establish a distinguishable power based pattern for pilot carriers in the at least one symbol,

means and respective operations for establishing power accumulation sums for possible pilot carriers of the symbol based on the pattern, and

means and respective operations for determining a power accumulation sum maximum of the sums for indicating a pilot carrier position.

Some embodiments of the invention can find the position of scattered pilots within an OFDM symbol fast.

Various embodiments of the invention propose to use a power based fast scattered pilot synchronization to cut down the time needed for scattered pilot synchronization even to a minimum of only one symbol such as only one OFDM symbol. The various embodiments utilize the predetermined scattered raster pilots positioning in the symbol, in that scattered pilot carriers are boosted in higher amplitude compared to data carriers.

By sensing all possible scattered pilot raster positions with a power accumulation, the current location of the scattered pilots can be found.

In various embodiments, a synchronization can be based on realizing, that certain identifiable carriers such as scattered pilot carriers can be found at the same standardised positions (i.e. the same carrier index) within the symbol. Moreover, the certain identifiable carriers such as scattered pilot carriers can be found at the certain standardised positions (i.e. having the certain carrier index) in every standardised symbol. This may be seen, for example, from the diagonal offset pattern for pilots in some illustrations. The pilot carriers are boosted with higher magnitude, while other carriers such as data carriers are not. By sensing possible raster positions of the pilot carriers with a power accumulation, a clear distinct power sum magnitude maximum can be found for the current pilot carrier position. A certain symbol can be identified based on the pilot carrier position.

Various embodiments of the invention give a very fast way of obtaining the identifier(s) for certain symbol number in the multi-carrier transmission stream. This suffices to proceed with the further channel estimation and synchronization process. As an overall result, the whole synchronization phase of the receiver can be quite dramatically reduced. In the various embodiments this is advantageous for mobile receivers, which are operating in TDM based power saving mode. Moreover, various embodiments of the invention are quite robust to Doppler frequency based interference.

In various embodiments of the invention, synchronization time (i.e. time until the Channel Estimation) can be significantly reduced. Various embodiments may work under many relevant channel conditions making the embodiments feasible. In some embodiments, robustness of the process can be improved by cumulated power based fast scattered pilot synchronization.

In the various further embodiments, the cumulated power sums can be defined for, for example, consecutive symbols. Thereby, however, maintaining the speed of the process and providing more robustness. Of course any other symbol than the neighbouring can be selected as well.

Thus, the various embodiments of the invention can safely substitute the prior art TPS based OFDM synchronization. Also the complexity needed for the various embodiments of the invention can be relatively low since most of the required computational resources are anyhow available at the post FFT-acquisition resources, and therefore applicable. However, the post FFT-acquisition computational resources are not mandatory implementations. For example, a more specific design can be applied as well, or other used circuitry of the receiver applied.

For better understanding of the present invention, together with other and further objects thereof, reference is made to the following description, taken in conjunction with the accompanying drawings, and its scope will be pointed in the appending claims.

## BRIEF DESCRIPTION OF THE DRAWINGS

The invention will now be described, by way of example only, with reference to the accompanying drawings, in which:

Figure 1 depicts an example of the time slicing concept according to prior art,

Figure 2 depicts an example of DVB-T synchronization sequence according to prior art,

Figure 3 depicts a partial functional block diagram for a receiver for a receiving a signal in accordance with some embodiments of the invention,

Figure 4 depicts a partial functional block diagram for a receiver for a receiving a signal in accordance with some embodiments of the invention,

Figure 5 depicts a partial functional block diagram for a receiver for a receiving a signal in accordance with still another embodiments of the invention,

Figure 6 depicts a schematic example of scattered pilot positions where carrier power sums are adapted to be applied in accordance with some embodiments of the invention,

Figure 7 depicts a schematic example of scattered pilot positions where cumulated carrier power sums are adapted to be applied in accordance with some embodiments of the invention,

Figure 8 depicts a partial functional block diagram of a receiver for receiving a transmission in accordance with some embodiments of the invention,

Figure 9 depicts a partial functional block diagram of a receiver for receiving a transmission in accordance with some embodiments of the invention,

Figure 10 depicts a general simplified block diagram of a receiver for receiving a transmission in accordance with embodiments of the invention,

Figure 11 depicts a general architecture of the system where some principles of the embodiments of the invention can be applied.

## DETAILED DESCRIPTION OF THE EMBODIMENTS

Thus the following description of the various embodiments, reference is made to the accompanying drawings which form a part hereof, and in which are shown by way of illustration various embodiments in which the invention may be practiced. It is to be understood that other embodiments may be utilized and structural and functional modifications may be made thereto without departing from the scope of the present invention.

**Multi-carrier signal receiving and power based fast scattered pilot synchronization**

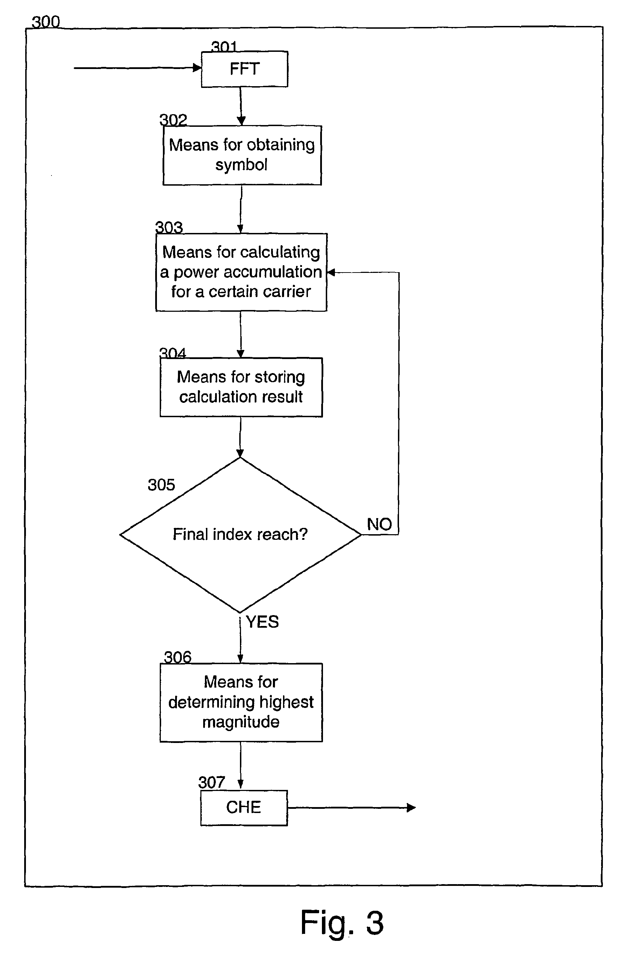

Figure 3 depicts a partial functional block diagram for a receiver 300 for a receiving a signal in accordance with some embodiments of the invention. In Fig. 3 some portions of the receiver 300 are depicted comprising functional blocks therein, and for the sake of clarity some other parts of the receiver are omitted. The functional block may be adapted to perform the corresponding method of the receiver. The receiver 300 comprises means for receiving a multi-carrier transmission (not shown) and means for performing a Fast Fourier Transform (FFT) for the received signal in the block 301.

Various embodiments of the invention apply a method and corresponding means for receiving a multi-carrier signal such as OFDM signal. In various embodiments, this is advantageous since the multi-carrier transmission has awoken great deal of interest. The multi-carrier transmission can have a certain scattered raster pilot positions scheme. The multi-carrier such as the OFDM signal can be used in DVB. Further the multi-carrier signal is applicable in other systems as well such as mobile phone technology, other digital television systems such as e.g. ISDB (Integrated Services Digital Broadcasting) and in DAB (Digital Audio Broadcasting). In still some cases the multi-carrier transmission, e.g. OFDM, is embodied in mobile DVB or in IP over mobile DVB environment. The embodied mobile DVB environment can be referred to as DVB-H (DVB handheld) or earlier sometimes DVB-X also. The multi-carrier transmission is received at the receiver. Because of the power saving aspects, the time-slicing concept is applied for saving the power of the receiver, which can be a mobile one. In the time slicing, the transmission takes place in form of bursts. Correspondingly the receiver can receive and by the means adapt to possibly certain bursts. The synchronization into bursts should be generally fast. Some embodiments of the invention are related to the scattered pilot scheme of DVB-T / DVB-H. The same principle may also be applied to similar pilot schemes.

In some receivers and receiving methods applying some embodiments of the invention, during synchronization of the receiver the symbol number (e.g. in OFDM: 0 to 67) has to be found. For every symbol number, the position of the scattered pilots is defined. Scattered Pilots are used for Channel Estimation and Fine-Timing. Therefore, these operations can only be started after the position of the scattered pilots is known. So during synchronization of the receiver, the position of the scattered pilots within the symbols should be determined in order to start the channel estimation. The receiver comprises means for determining the position of the scattered pilots within the symbol.

Thus, in various embodiments of the multi-carrier signal reception, after carrier and timing synchronization have been achieved, the position of scattered pilots within an OFDM symbol has to be determined before the channel estimation can be started. As the scattered pilot position is directly related to the OFDM symbol number within the OFDM frame, no dedicated scattered pilot synchronization is typically included in standard DVB-T receivers.

Referring back to the examples of Fig. 3, after the FFT of means 301, the receiver comprises means for obtaining a symbol in the block 302.

In various embodiments of multi-carrier transmission systems, transmitters, and transmission methods, the symbols are transmitted in a certain predetermined sequenced manner, typically based on standards. Various embodiments of the invention relate to method and means for receiving the symbols and how to process them. The symbol can be received and saved. The symbols are transmitted continuously so that a received symbol relates to a certain point in time and another point in time relates to another symbol.

In various embodiments of the invention present a method and means to determine the scattered pilot position with a fixed synchronization time of OFDM symbol. It should be noted that even only one symbol can be applied. Therefore, the synchronization time is very fast.

Thus, the embodiments allow to proceed with channel estimation and subsequent tasks while OFDM frame synchronization may still be pursued.

For example in some embodiments by checking all possible scattered pilot raster positions with a power accumulation, the current location of the scattered pilots can be found. In some further embodiments some of the possible scattered pilot raster positions can be applied based on the predetermined pattern of the occurrence of pilots, and the invention is not limited to exhaustive amount of possible pilots.

Referring back to the Fig. 3, the receiver comprises means 303 for calculating a power accumulation for a certain carrier of the symbol.

The selection of the candidate carrier within the symbol can be based on the distinguishing pattern for pilot carriers of the symbol. The possible carrier can also be referred to when indicating the applied carrier. Thus the candidate indicates the applied carrier and the possible carrier indicates the pilot or *vice versa.* For example, the carrier can be selected as a candidate for possible pilot carrier position. The selection can be based on the likely position of the pilot derived from the appearance pattern of the pilots in certain amount of symbols.

Various embodiments of the invention propose a power based fast scattered pilot synchronization to cut down the time needed for scattered pilot synchronization even up to minimum of one symbol. Various embodiments utilize the fact, that scattered pilots are boosted in higher amplitude compared to data carriers. The position of the scattered pilots within the symbol can be based on a certain predetermined pattern. The positioning of the scattered pilots within the symbol can vary from one symbol to another. However, the variation between, for example, two consecutive symbol is predetermined. For example, the scattered pilots are searched for in the typical diagonal offset structure.

Referring back to the Fig. 3, the receiver comprises means 304 for storing the calculation result. The result of the means 303 can be stored therein. In one embodiment of the invention the storing means 304, where the result can be stored is accumulating means such as an accumulator which may alternatively referred to as a power accumulator.

In some embodiments there is one accumulator for each possible scattered pilot position (e.g. four in the present DVB-T / DVB-H). It should be noted that the stored result can be something else depending on the appearance pattern of the pilots. So, the power sum result can be added to only that one of these, to which the tested carrier belongs to in the embodiments.

Referring back to the examples of Fig. 3, the receiver comprises means 305 for testing whether the final or ending power sum index such as $K_{max}$ has been reached. So an operation loop is established when the blocks 303, 304, and 305 are adapted to run and the calculation process can be performed until certain ending index is reached. If it is not, a next power sum for certain different carriers is adapted to be calculated according to the means 303 and 304. In various embodiments, the ending power sum index and the number of the power sums are selected in such a way that a certain predetermined known correspondence pattern is used for pilot carriers (positions) in a matrix comprising carriers of this symbol. Thus the amount of power sums and the number of the last power sum can be based on the known correspondence pattern for pilot carriers (positions) in the matrix having carriers of the one symbol.

Various embodiments are based on the idea, that scattered pilots of the multi-carrier signal can be found at the certain same positions (at certain carrier indexes) within the symbol. For example, certain carrier indexes can indicate the position of the pilot carrier. An interval between the pilots is known. Also the pilot carrier repetition pattern in a symbol can repeat after certain amount of symbols, for example every fourth symbol. So certain symbols have similar pilot carrier position pattern. Moreover, in the other symbols the positioning of the pilot carriers has similar pattern but the starting point can be different. So the pilots are situated in different positions compared to the neighbouring symbols but the positioning of the pilots within the symbol is still certain predetermined. These scattered pilots are boosted with higher amplitude than data carriers in the symbol.

In some further embodiments, power accumulation sums for a certain carriers (pair) can be calculated. The result is stored into a memory. A condition of a ending carrier index is being checked. For example, the maximum K-mode index id is adapted to be checked by the receiver. If the ending carrier index is not reached, the calculation and the storing is continued. For example, numerical values of the various carriers of the symbol are processed. If the ending index is reached, the memory is processed. Accordingly based on power accumulation metrics, certain amount of final power accumulations are calculated. Final power accumulations can be calculated in such a way that certain power accumulation sums (sometime referred to as pairs) are summed. The power accumulation result having the maximum, selected from the final power accumulations, shows the pilot carrier position.

Referring back to the example of Fig. 3, the receiver comprises means 306 for determining a highest magnitude maximum from the calculated power accumulation sums. A distinguishable power sum magnitude maximum can be found for the power accumulation sum indicating the current scattered raster pilot position. The determination of the highest magnitude by the means 306 is performed for the power sums(s) calculated in the means 303, 304 and 305.

Thus by detecting or checking all possible scattered pilot raster positions with a power accumulation, a distinguishable magnitude maximum is found indicating the current location of the scattered raster pilot positions.

For example, the certain substantially similar scattered pilot raster position is periodical in OFDM symbol. The same raster pilots pattern within a symbol is repeated e.g. every fourth OFDM symbol in some multi-carrier systems and methods. The symbols therebetween have certain known pilot position pattern wherein the five OFDM symbols establish a known pattern for pilot carriers. By checking the four possible scattered pilots (or positions) within a symbol, the current scattered pilot raster position is determined by the highest magnitude out of these four.

Referring back to the Fig. 3, the receiver comprises also means 307 for the channel estimation CHE.

Some embodiments of the invention give a significantly fast way of obtaining the two Least Significant Bits (LSBs) of the OFDM symbol number in a DVB-T / DVB-H data stream. The two LSBs suffice to proceed with the further channel estimation and synchronization process.

In various embodiments, as an overall result, the time for the whole synchronization phase of the receiver is dramatically reduced. This is especially important for DVB-H receivers, especially when they are operating in time-slice mode and in which the power saving is of great importance. Thus variedly embodied synchronization techniques such as the power based fast scattered pilot synchronization can speed up the synchronization time of a DVB-T/H receiver drastically. For example, for a DVB-H receiver working in time-slicing mode, this gives an important reduction in power consumption. The power based fast scattered pilot synchronization can be substituted for the TPS based OFDM frame synchronization. The possibility of using the time-slicing can be better exploited as the synchronization times of the receiver is significantly minimized.

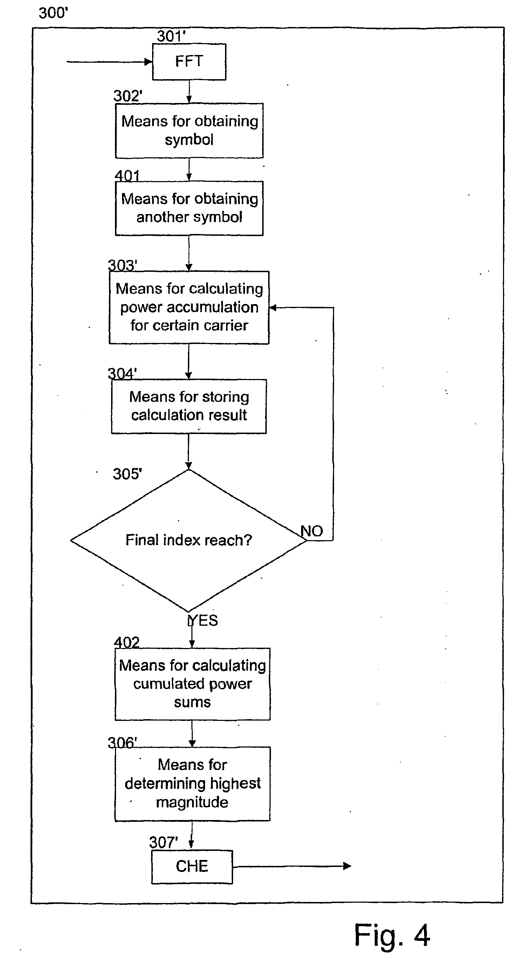

Figure 4 depicts a partial functional block diagram for a receiver (300') for a receiving a signal in accordance with some embodiments of the invention. In Fig. 4 some portions of the receiver 300' are depicted comprising functional blocks therein, and for the sake of clarity some other parts of the receiver are omitted. The functional blocks may be adapted to perform the corresponding method of the receiver. The receiver 300' can be adapted to perform the functions and means referred to in the Fig. 3. The receiver comprises means for receiving a multi-carrier transmission and means for performing the FFT for the received signal in the block 301'. The receiver further comprises means 302' for obtaining a symbol such as the OFDM symbol. The receiver comprises also means 401 for obtaining or receiving another symbol.

As described in various embodiments of the multi-carrier transmission systems, transmitters or transmission methods, the symbols are transmitted in a certain predetermined sequenced manner, typically based on standard. Various embodiments of the invention relate to method and means for receiving the symbols and how to process them. The symbol can be received and saved. The symbols are transmitted continuously so that a received symbol relates to a certain point in time and another point in time relates to another symbol.

In some further embodiments of the invention consecutive symbols can be applied. In some embodiments of the invention two consecutive symbols are applied. However, the accessed or selected symbols can be also selected differently. So the accessed or selected symbols can be other than consecutive, and there can be selected more than two symbols for still further improving the robustness.

Thus the noise robustness can be improved in these embodiments. The consecutive symbols can of course be set to be the current and previous symbols or the current and following symbols depending on the embodiment. The scattered pilots (or scattered raster pilot positions) of consecutive OFDM symbols can be searched for detecting the scattered raster pilot position. So the scattered raster pilot position can further identify a certain symbol of the transmission/reception.

Still in some further embodiments of the invention other symbol pair than a pair of neighbouring symbols can be used. Also the robustness can be further increased by using more than two symbols, for example, a plurality of symbols. The processing time may be longer in these cases.

Referring back to the Fig. 4, the receiver comprises means 303' for calculating power accumulation for certain carrier (pairs) within a symbol, means (304') for storing the calculation result, and means 305' for determining whether the ending index has been reached. So an operation loop is established when the blocks 303, 304, and 305 are adapted to run and the calculation process can be performed for candidate carriers of the symbol. For example, after the first symbol is processed the another symbol is similarly processed. For another example, four possible scattered raster pilot positions are processed within a symbol and four possible scattered raster pilot position are processed in the another symbol.

The receiver of Fig. 4 comprises also means 402 for calculating cumulated power sums (CPSs). Thus for, for example, improving robustness, also positions for scattered raster pilots of more than one symbol can be possibly searched and obtained. The cumulated power sum uses a power accumulation sum of the first symbol and a power accumulation sum of the another symbol. The selection of the power accumulation sums for the cumulated power accumulation sum can be such that the correspondence pattern of the pilot carriers is utilised. So the selection of the power sum in question is made in accordance with the appearance of the pilots within the two symbols. Thus the pilot carriers in different symbols do have a match for indicating a higher power accumulation. For example, the scattered raster pilot carriers are searched for and utilized based on their typical 'diagonal' offset structure.

The receiver of Fig. 4 comprises also means 306' for determining the highest magnitude maximum from the cumulated power sums. The highest one determines the current scattered raster pilot position. The receiver comprises also the CHE means 307'.

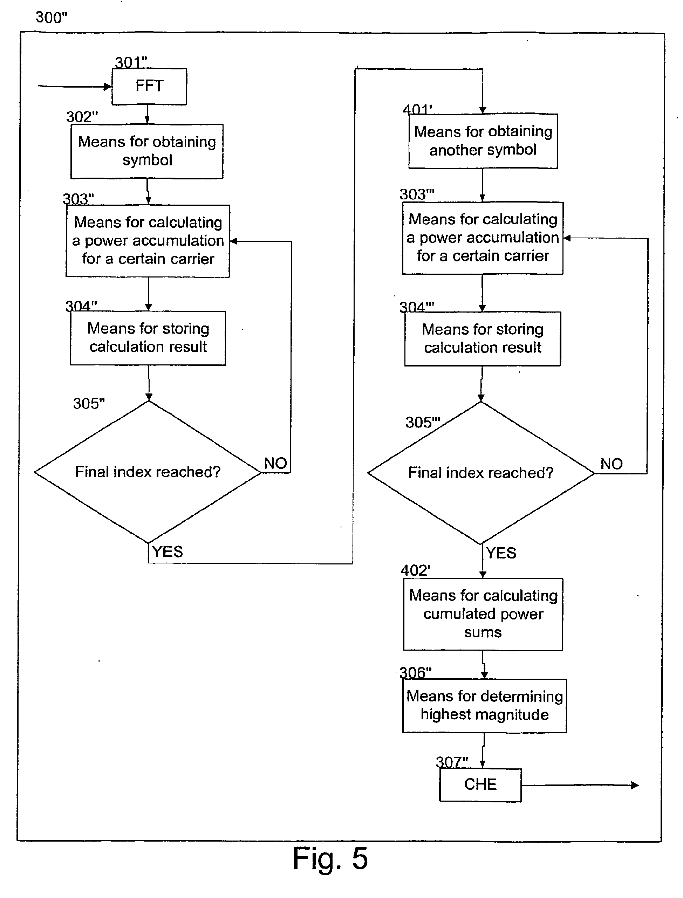

Figure 5 depicts a partial functional block diagram for a receiver 300" for a receiving a signal in accordance with still another embodiments of the invention. In Fig. 5 some portions of the receiver 300' are depicted comprising functional blocks therein, and for the sake of clarity some other parts of the receiver are omitted. Some functional blocks of Fig. 5 may be adapted to perform the corresponding method of the receiver. The receiver 300" of Fig. 5 can be adapted to perform the functions and means referred to in Fig. 3. The receiver comprises means for receiving a multi-carrier transmission (not shown) and means for performing the FFT for the received signal in the block 301". The receiver comprises means 302" for obtaining a symbol such as the OFDM symbol. The receiver comprises also means 401' for obtaining another symbol. In Fig. 5 the receiver is adapted to first obtain the symbol by the means 302". The receiver is further adapted to determine the power accumulation sum(s) of the certain carrier(s) for the first symbol in the means 303", 304", and 305". For example, the receiver may determine four power sums for possible scattered pilot raster carrier positions within the symbol. The receiver of fig. 5 is further adapted to obtain and determine the power accumulation sum(s) of the certain carrier(s) for the another symbol in the means 401', 303''', 304''', and 305'''. For example, the receiver may determine four power sums for possible scattered pilot raster carrier positions within the another symbol.

The receiver of Fig. 5 further comprises means 402' for calculating cumulated power sums. Thus for, for example, improving robustness, also scattered raster pilots of more than one symbol can be possibly searched and obtained. The cumulated power sum uses a certain power accumulation sum of the first symbol and a certain power accumulation sum of the another symbol. The power accumulation sums for the cumulated power accumulation sum is selected in such a way that the correspondence pattern of the scattered raster pilot carrier positions is utilised. Thus the pilot carriers in different symbols do have a match for indicating a higher power accumulation. For example, the scattered raster pilot carriers are searched for and used based on their typical 'diagonal' offset structure.

The receiver of Fig. 5 comprises also means 306" for determining the highest magnitude maximum from the cumulated power sums. The highest one determines the current scattered raster pilot position. The receiver comprises also the means 307" for CHE.

**Various power based fast scattered pilot synchronizations**

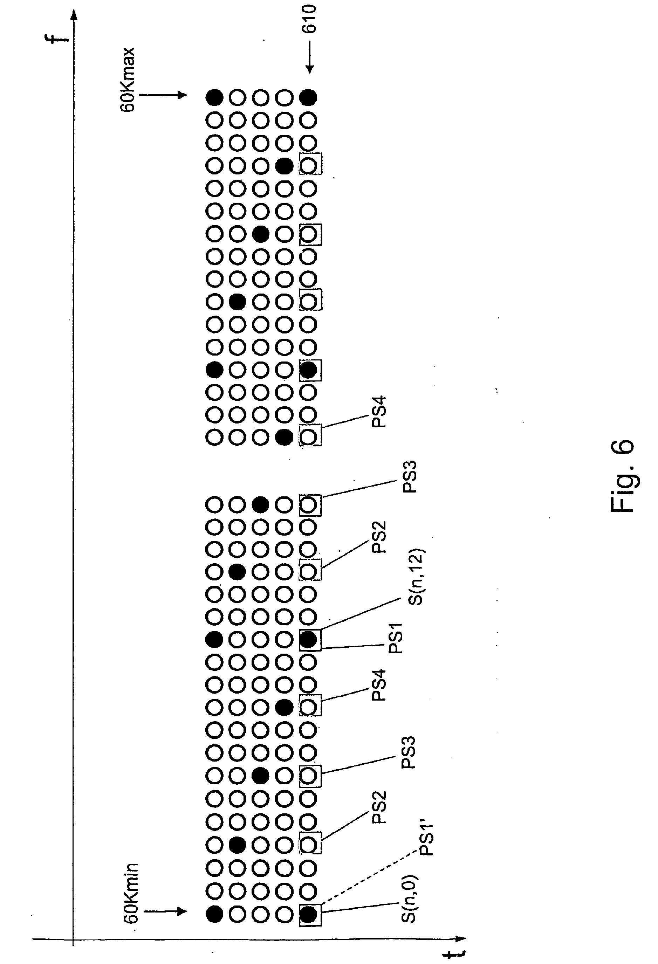

Figure 6 depicts a schematic example of scattered pilot positions where carrier power sums are adapted to be applied in accordance with some embodiments of the invention. With some embodiments of the invention proposing a fast power based scattered pilot synchronization, the position of the scattered pilots within the OFDM symbol, and thus the two LSBs of the OFDM symbol number, is found within just one OFDM symbols. Since synchronization can only proceed after this position is found, a considerable speed-up is achieved compared to the TPS based solution. For the time-slicing, this is relevant, because the DVB-H time-slicing receiver must prepare for the worst-case delay in order to guarantee synchronization.

Thus in some further embodiments of the invention it is proposed to use a power based fast scattered pilot synchronization to cut down the time needed for scattered pilot synchronization to just one OFDM symbols. The process and the receiver device or any sub-assembly or component of the receiver utilizes the fact, that the scattered pilots are boosted in amplitude by 4 / 3 compared to data carriers.

The position of scattered pilots can be, for example, given in the standard publication "Digital Video Broadcasting (DVB)", ETSI ETS 300 744, as disclosed in the said standard:

For the symbol of index 1 (ranging from 0 to 67), carriers for which index k belongs to the subset

$$\left\{ k = K_{\min} + 3 \times (l \bmod 4) + 12p / p \quad integer, p \geq 0, k \in [K_{\min}; K_{\max}] \right\}$$ are scattered pilots. Where $p$ is an integer that takes all possible values greater than or equal to zero, provided that the resulting value for $k$ does not exceed the valid range $[K_{\min}; K_{\max}]$. $K_{\min}$ is 0, and $K_{\max}$ is 1704 for the 2k mode, (3408 for the 4k mode), and 6816 for the 8k mode.

Figure 6 illustrates the positions of the scattered pilots (shown as dark spots). The data carriers are depicted as circles in the example. A horizontal axis denotes frequency f. Thus one entire horizontal row depicts a symbol, i.e. a symbol 610. A vertical axis denotes time t. The vertical rows depicts carriers with the same index K. For example, carriers 60Kmin having index $K_{\min}$ to carriers (60Kmax) having index $K_{\max}$. So the transmission and reception of the symbols is time dependent, and the different carriers in a symbol have different frequencies.

In some DVB standardised examples there are symbols with numbers 0 to 67 (in total 68 symbols). The symbols are indexed with numerical order. So these arrive at different time. In the DVB example, the K-value depend on applicable modes and can be for example in 2k mode ($K_{\min}$ = 0 - $K_{\max}$ =1704), in 4k mode ($K_{\min}$ = 0 - $K_{\max}$ = 3408), and in 8k mode ($K_{\min}$ = 0 - $K_{\max}$ = 6816).

As shown a pattern is established for the pilot carriers (dark spots) in the example of Fig. 6. This is shown as pilots appear in diagonals in the Fig 6. Moreover, certain indexes of carriers of different symbols have the similar appearance within their respective symbol.

Some embodiments of the power based fast scattered pilot synchronization utilizes the fact, that the scattered pilots are boosted in amplitude by 4/3 compared to data carriers.

In the example, by sensing all four possible scattered raster pilot positions with a power accumulation, the current location of the scattered pilots can be found.

Still referring to Fig. 6, S(n,c) denotes the c-th subcarrier of the current OFDM symbol (index n) as a complex number. In the Fig. 6, examples S(n,0), and S(n,12) are are shown for depicting some of the following formulas. It should be noted that for the sake of clarity only some positions of power sums $PS_1, PS_1', PS_2, PS_3$ and $PS_4$ (possible pilot carrier positions) according to the formulas are depicted. The other positions can be obtained based on the given formulas running the index p further. The four power sums can be given as:

$$PS_1(n) = \sum_{p=0}^{p_{\max}} S(n,12p+12) \cdot S^*(n,12p+12)$$

$$PS_2(n) = \sum_{p=0}^{p_{\max}} S(n,12p+3) \cdot S^*(n,12p+3)$$

$$PS_3(n) = \sum_{p=0}^{p_{\max}} S(n,12p+6) \cdot S^*(n,12p+6)$$

$$PS_4(n) = \sum_{p=0}^{p_{\max}} S(n,12p+9) \cdot S^*(n,12p+9)$$

with $p_{\max}$ =141 for the 2k mode, 283 for 4k mode and 567 for 8k mode.

With this definition of the power sums, all four take the same number of carriers into account.

Another alternative would be to define $PS_1'$ as:

$$PS_1'(n) = \sum_{p=0}^{p_{\max}} S(n,12p) \cdot S^*(n,12p)$$

Thus by sensing all four possible raster positions of the scattered pilots, a clear distinct magnitude maximum

$$PS_{max}(n) = \max(PS_p(n)); p \in \{1,2,3,4\}$$

can be found for the current scattered pilot raster position (SPRP)

$$SPRP(n) = \arg\max_p(PS_p(n)); p \in \{1,2,3,4\}.$$

The SPRP can distinguishably indicate the position of the pilot, thereby enabling a symbol to be recognized. Thus, the one giving the highest magnitude determines the current scattered raster pilot position.

The examples of the formulas $PS_1$, $PS_2$, $PS_3$, $PS_4$ and $PS_1$' can produce numerical real values. However, in some further embodiments complex and/or the numerical values can be applied, i.e. the values can represent absolute values of i/q - parameters.

The indexes in the formulas can be adopted to correspond with the scattered raster pilot positions of the applied pattern. Thus the Fig. 6 depicts an example only and do not limit the invention to the specific pattern of Fig. 6. Also the pilot positioning can be such that the certain same carrier indexes in the symbol may not necessary correspond, thus have the boosted power, but i.e. carrier indexes having certain other repetition patter in the symbol correspond. All that this would require, is the predetermined regular known pattern for scattered raster pilot positions that the formulas can be adopted to the predetermined regular known pattern in question.

In the depicted example of Fig. 6, the power accumulation sum(s) $PS_1$ and $PS_1$' have the maximum. Accordingly, a certain symbol can be deduced to be the currently received symbol based on this highlighting.

The time needed for some embodiments of the fast power based scattered pilot synchronization can be only one OFDM symbol. Compared to standard TPS synchronization, this is a considerable improvement.

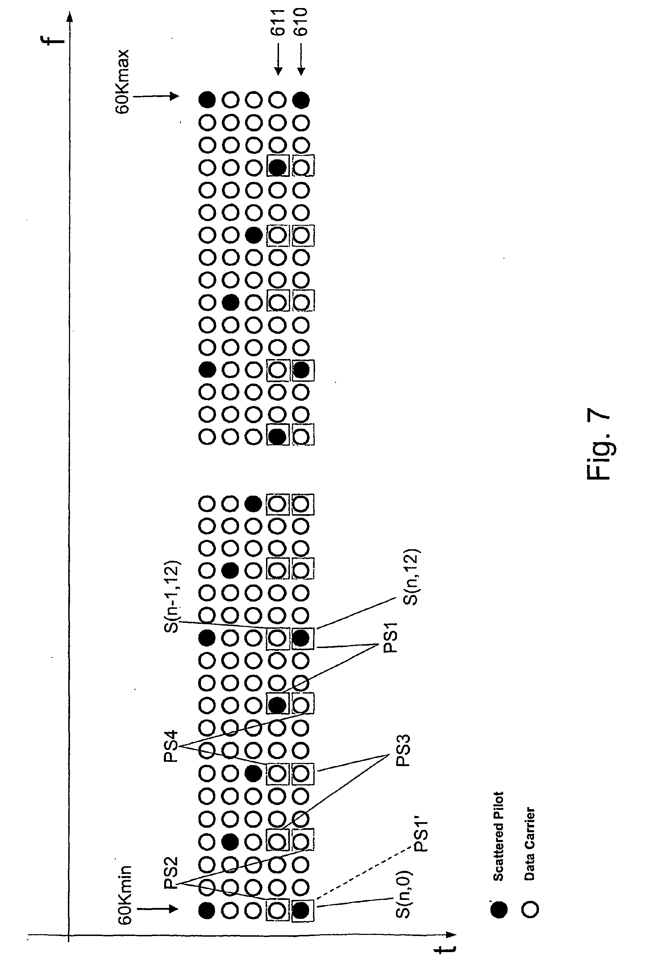

Figure 7 depicts an example of scattered pilot positions where cumulated carrier power sums (CPSs) are adapted to be applied in accordance with some embodiments of the invention. The example of Fig. 7 is based on the similar principles than in the Fig. 6. In addition to Fig. 6, in the Fig. 7 the marked carriers depict the cumulated power sums (CPSs). It should be noted that for the sake of clarity only some positions of possible pilot carrier positions according to the formulas are depicted. The example of Fig. 7 can provide more robustness against the noise, and make the process and the receiver more reliable. For improving the noise robustness, also the scattered pilots of more than one OFDM symbols can be searched and used. For example two consecutive OFDM symbols can be applied as follows, wherein $PS(n$-1) denotes the neighbouring symbol which can also be referred to as the another symbol.

$$CPS_1(n) = PS_1(n) + PS_4(n-1)$$

$$CPS_2(n) = PS_2(n) + PS_1(n-1)$$

$$CPS_3(n) = PS_3(n) + PS_2(n-1)$$

$$CPS_4(n) = PS_4(n) + PS_3(n-1)$$

The scattered pilots are searched for in their 'typical' diagonal offset structure. The example of Fig. 7 can be extended to take more OFDM symbols into account.

Thus the CPS giving the maximum shows the current SPRP and indicates the symbol in question.

**Various further Implementations**

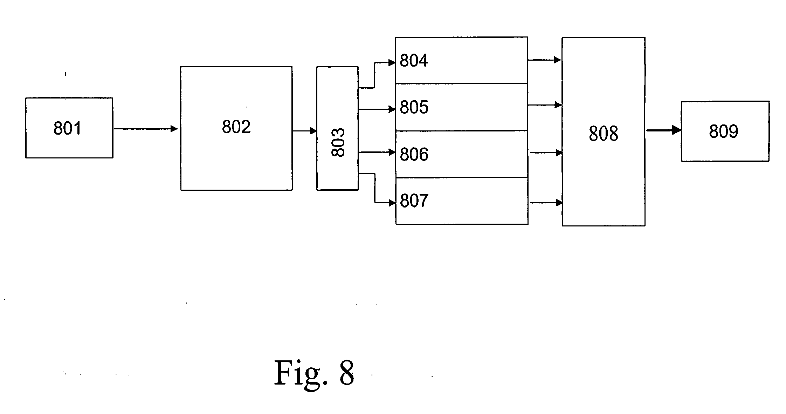

Figure 8 depicts a partial functional block diagram of a receiver for receiving a transmission in accordance with some embodiments of the invention. Thus having knowledge of the symbol number, also the position of the scattered pilots can be known, and this can be one goal of the receiver and operations. A decision block 808 is meant to do the maximum search. Some embodiments of the receiver can be adapted to carry out the means and process of the example of Figs. 3 - 7. The receiver comprises a FFT block 801 for performing the FFT for the received multi-carrier signal such as the OFDM signal. The FFT block 801 or the like is coupled with a power accumulation sum block 802. A symbol is obtained and received by the FFT 801. The power accumulation sum block 802 is adapted to calculate the power accumulation sum for certain carriers of the symbol. The carriers for the power sum are selected in such a way that possible pilot carrier positions are selected. The power accumulation sum block 802 is coupled with accumulators 1 to 4 having reference numbers respectively 804 to 807 via the demultiplexer 803. The accumulators 804 to 807 are adapted to store the respective power accumulation sum calculation results, e.g. power sum $PS_1$ can reside in the accumulator 1 804.

Still referring to the Fig. 8, the decision block 808 is adapted to test the power sum results of the accumulators 804 to 807. Control logic for ending the accumulating of the power sums is omitted in the figure 8 for simplicity reasons. It should be noted that the number of the power sums and the respective accumulator are not limited to four as in the example.

Still referring to the Fig. 8, the decision block 808 can calculate or find a power accumulation magnitude maximum for the calculated power accumulations sum. A distinguishable power accumulation magnitude maximum is found for the power accumulation sum indicating the pilot carriers indexes because the scattered pilots are boosted with higher amplitude than the data carriers.

Thus by sensing possible raster positions of the scattered pilots, a distinguishable power accumulation magnitude maximum is found for the current scattered pilot raster position.

Still referring to the Fig. 8, the decision block can be coupled with the channel estimation CHE 809.

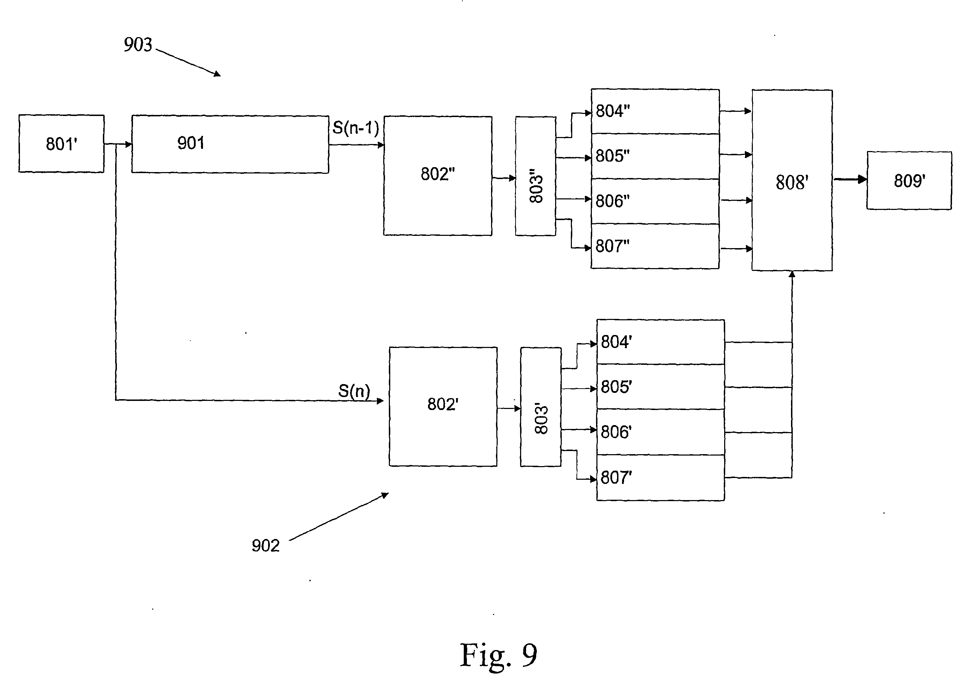

Figure 9 depicts a partial functional block diagram of a receiver for receiving a transmission in accordance with cumulated power sum embodiments of the invention. The example of Fig. 9 depicts some of the cumulated power sum embodiments. The receiver comprises two branches, one for symbol S(n) 902 and the other for the another symbol S (n-1) 903. The branch 902 can be equivalent to the one of fig. 8 or the like. In the branch 903 the FFT block 801' or the like is coupled with a delay block 901. The FFT block 801' is coupled with a power sum 802". A symbol is obtained and received by the FFT 801'. The delay block 901 can be adapted to delay the received symbol to some extent in time dependent way. The received symbol can be delayed to certain another symbol. The delay block 901 may then obtain the another symbol such as the consecutive symbol or the like.

Referring to the example of Fig. 9, the branches 902 and 903 can operate similarly with the another symbol as the one depicted referring to Fig. 8. It should be noted that the number of the summed carriers and the respective accumulators are not limited to four as in the example. The number carriers and symbols correspondences in such a way that a certain predetermined known correspondence patter is established for pilot carriers (positions) in a matrix comprising carriers of these two symbols.

Still referring to the Fig. 9, the decision block 808' can calculate the cumulated power sum based on the S(n) branch 902 and the S(n-1) branch 903. Moreover, the decision block 808' can find a cumulated power accumulation magnitude maximum for the calculated cumulated power sums. A quite robust distinguishable cumulated power accumulation magnitude maximum is found for the cumulated power sums indicating the pilot carriers (positions) because the scattered pilots are boosted with the higher amplitude than the data carriers.

Thus by sensing all possible scattered raster pilot positions with a power accumulation, the current location of the scattered pilots can be found.

Still referring to the Fig. 9, the decision block can be coupled with the channel estimation block (CHE) 809'.

There are various embodiments for calculating the cumulated power sums (CPSs). For example, Fig. 8 can be applied such that the demultiplexer 803 of Fig. 8 is intelligently controlled to add, for example, $PS_1(n$-1) to the same accumulator as $PS_1(n)$. As the symbols are anyhow coming from FFT in sequential order (e.g. after symbol n-1, symbol n is coming), no dedicated delay block 901 is necessarily needed.

Some embodiments may relate to a DVB-T derived standard, called DVB-H (DVB handheld) which has awoken great deal of interest, and it will most probably support, among others, the feature of time-slicing. This will be the key enabler to support DVB-H in small and portable devices, such as mobile phones.

The complexity needed for implementing various embodiments of the synchronization technique is fairly low, since most of the required computational resources are anyhow available from post-FFT acquisition. Of course, the post FFT-acquisition computational resources are not only mandatory implementations. For example, a more specific design can be applied as well, or other used circuitry of the receiver applied.

Embodiments of the invention can be implemented in many DVB-T / DVB-H receiver. In some embodiments of the invention this can be done by an ASIC for example. Thus a chipset for receiver the multi-carrier transmission in accordance with the embodiments may be one or more ASIC.

In still some of the various embodiments, the block, which will include the scattered pilot synchronization, can be a buffer block (BUF) of the receiver. This buffer block can be used to store the data carriers and scattered pilot carriers of several OFDM symbols in order to allow channel estimation (CHE) to span over several OFDM symbols.

Therefore, at the output of the FFT, there is a demultiplexer that splits the carriers into data carriers, continual pilot carriers, scattered pilot carriers, and possibly TPS carriers. In order to do so, the position of the scattered pilots (the carrier indices of these) has to be known. Position of all the others is constant.

As referred to in the prior art, the traditional way was to use the TPS synchronization that, besides others, determines the OFDM symbol number within an OFDM frame. So this manner of operation may be replaced by the embodiments of the invention.

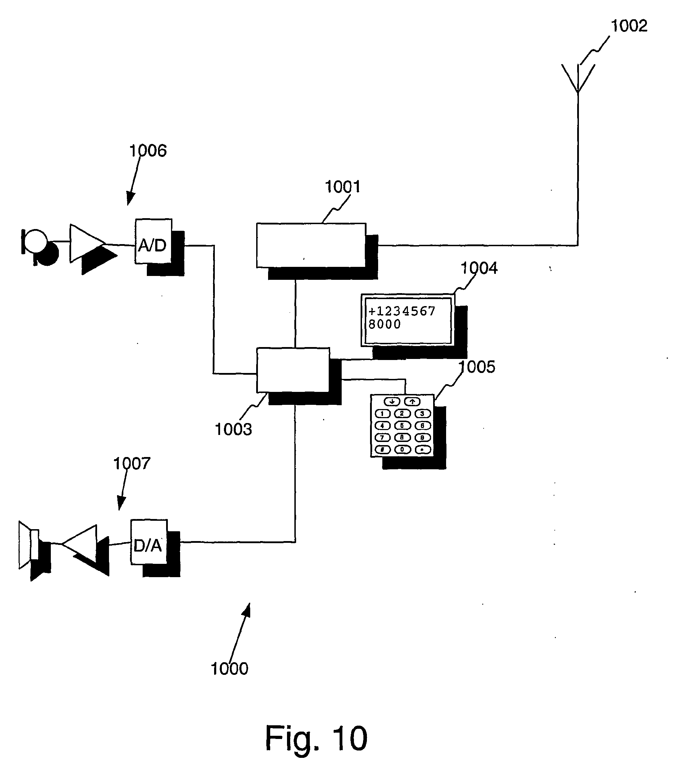

An example of Fig. 10 depicts a more general functional block diagram of the receiver. The illustrated receiver 1000 may be used in any or all of the various embodiments. The receiver comprises a processing unit 1003, a multi-carrier signal receiver part 1001 such as OFDM signal receiver and a user interface (UI). The user interface comprises a display 1004 and a keyboard 1005. In addition, the UI comprises an audio input 1006, and audio output 1007. The processing unit 1003 comprises a microprocessor (not shown), possibly a memory (not shown) and software (not shown). The processing unit 1003 controls, on the basis of the software, the operations of the receiver 1000, such as receiving a signal, receiving the data stream, receiving of a symbol, possibly receiving another symbol, establishing power accumulation sums of the possible scattered pilot carriers of the symbol(s), comparing the power accumulation results, determining the position of the scattered raster pilot position, calculating the symbol in question. Various operations and means are described in the examples of Figs. 3 - 9.

Referring to the Fig. 10, alternatively, middleware or software implementation can be applied (not shown). The receiver 1000 can be a hand-held device or a mobile device which the user can comfortable carry. Advantageously, the receiver 1000 can be a mobile phone which comprises the multi-carrier signal receiver part 1001 such as the OFDM receiver for receiving OFDM signal. The receiver may interact with the service providers.

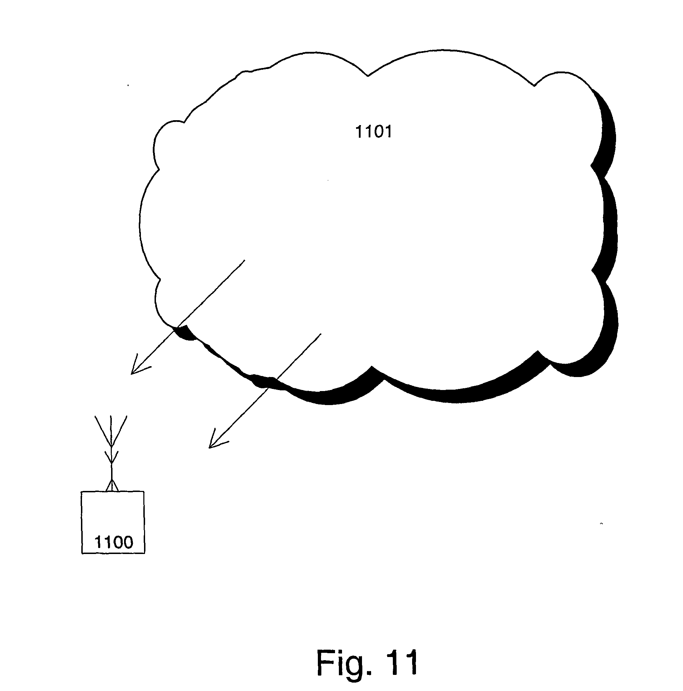

Various embodiments of the invention can be applied in the system of Fig. 11. The receiver 1100 operates preferably under coverage of a digital broadcast network (DBN) 1101 applying e.g. OFDM radio signal based transmission. The receiver is capable of receiving the transmission the DBN is providing and receives the OFDM based signal. Operations of the receiver can be receiving a signal, receiving the data stream, receiving of a symbol, possibly receiving another symbol, for example, by delaying the reception, power accumulation summing the carriers of symbol(s), comparing the results, determining the position of the scattered raster pilot position, determining the symbol in question. Various operations and means are described in the examples of Figs. 3 - 9.

**Ramification and scope**

While there has been described what are believed to be the preferred embodiments of the present invention, those skilled in the art will recognise that other and further changes and modifications may be made thereto and it is intended to claim all such changes and modifications as fall within the true scope of the invention.

**Claims**

1. A receiver for receiving a multi-carrier transmission, wherein the multi-carrier transmission comprises various symbols, each symbol comprising a plurality of carriers, the receiver comprising:

   means for accessing at least one symbol which is adapted to establish a distinguishable power based pattern for pilot carriers in the at least one symbol,
   means for establishing power accumulation sums for possible pilot carriers of the symbol based on the pattern, and
   means for determining a power accumulation sum maximum of the sums for indicating a pilot carrier position.

2. A receiver according to claim 1, wherein one of the possible pilot carriers is adapted to comprise the maximum in accordance with the predetermined pattern for the pilot carriers within the symbol.

3. A receiver according to any one of the preceding claims, wherein the position of the possible pilot carriers is adapted to be based on the pattern in such a way that carrier indexes having a pilot in a matrix of certain number of symbols are adapted to be selected, and the corresponding carrier index position within the accessed symbol is accordingly adapted to be selected.

4. A receiver according to any one of the preceding claims, wherein every predetermined carrier of the symbol is adapted to be selected for the means for establishing the power accumulation sums.

5. A receiver according to claim 4, wherein every fourth carrier of the symbol is adapted to be selected for the means for establishing the power accumulation sums.

6. A receiver according to claim 1, wherein the distinguishable power based pattern comprises boosted pilot carriers compared to data carriers of the symbol.

7. A receiver according to claim 6, wherein the pilots are boosted in amplitude of 4/3 compared to the data carriers.

8. A receiver according to claim 1, wherein the means for establishing power accumulation sums comprises:

   means for performing a first power accumulation sum for first possible pilot carrier positions of the symbol,
   means for performing a second power accumulation sum for second possible pilot carrier positions of the symbol,
   means for performing a third power accumulation sum for third possible pilot carrier positions of the symbol,
   means for performing a fourth power accumulation sum for fourth possible pilot carrier positions of the symbol, and
   the means for determining comprises:

      means for detecting the power accumulation maximum magnitude from the first, second, third, and fourth power accumulation sums for indicating the current scattered pilot raster position.

9. A receiver according to claim 8, wherein the first power accumulation sum is adapted to be calculated based on the following formulae:

$$PS_1(n) = \sum_{p=0}^{p_{max}} S(n, 12p + 12) \cdot S^*(n, 12p + 12),$$ wherein S(n,c) denotes c-th subcarrier of the current

symbol and $p_{max}$ depends on the used mode of the transmission.

10. A receiver according to claim 8, wherein the second power accumulation sum is adapted to be calculated based on the following formulae:

$$PS_2(n) = \sum_{p=0}^{p_{max}} S(n, 12p + 3) \cdot S^*(n, 12p + 3),$$ wherein S(n,c) denotes c-th subcarrier of the current sym-

bol and $p_{max}$ depends on the used mode of the transmission.

11. A receiver according to claim 8, wherein the third power accumulation sum is adapted to be calculated based on the following formulae:

$$PS_3(n) = \sum_{p=0}^{p_{max}} S(n, 12p + 6) \cdot S^*(n, 12p + 6),$$ wherein S(n,c) denotes c-th subcarrier of the current sym-

bol and $p_{max}$ depends on the used mode of the transmission.

12. A receiver according to claim 8, wherein the fourth power accumulation sum is adapted to be calculated based on the following formulae:

$$PS_4(n) = \sum_{p=0}^{p_{max}} S(n, 12p + 9) \cdot S^*(n, 12p + 9),$$ wherein S(n,c) denotes c-th subcarrier of the current sym-

bol and $p_{max}$ depends on the used mode of the transmission.

13. A receiver according to claim 8, wherein the first power accumulation sum is adapted to be calculated based on the following formulae:

## EP 1 706 974 B1

$$PS_1(n) = \sum_{p=0} S(n,12p) \cdot S(n,12p),$$ wherein S(n,c) denotes c-th subcarrier of the current symbol and

$p_{max}$ depends on the used mode of the transmission.

14. A receiver according to claim 8, wherein in the means for detecting the power accumulation maximum magnitude is adapted to be based on the following formulae:

$PS_{max}(n)$ = max($PS_p(n)$); $p \in \{1,2,3,4\}$, wherein $PS_p(n)$ denotes the first, second, third, and fourth power accumulation sums, p is adapted to determine pilot carrier positions for identifying a certain symbol, and the current scattered pilot raster position (SPRP) is adapted to be found based on the following formulae:

$$SPRP(n) = \arg\max_p \left(PS_p(n)\right), p \in \{1,2,3,4\},$$ wherein the $PS_p(n)$ denotes the first, second, third, and fourth power accumulation sums, p is adapted to determine pilot carrier positions for identifying a certain symbol.

15. A receiver according to claim 1, wherein the means for accessing comprises:

means for obtaining a first symbol of the transmission,
means for obtaining another symbol in relation to the first symbol.

16. A receiver according to claim 15, wherein the accessed symbols comprise currently received symbol and certain predetermined another symbol preceding or following the currently received symbol.

17. A receiver according to claim 15, wherein the accessed symbols comprise currently received symbol and certain predetermined another symbol preceding or following the currently received symbol so that the correspondence pattern is adapted to be established between pilot carriers of the symbols for possible carrier positions within the matrix of the symbols.

18. A receiver according to any one of the claims 15 - 17, wherein the certain predetermined another symbol comprises a consecutive symbol preceding or following the currently received symbol.

19. A receiver according to claim 15, wherein the means for establishing power accumulation sums comprises:

means for establishing power accumulation sums for possible pilot carriers of the first symbol, and the receiver further comprises:

means for establishing another power accumulation sums for possible pilot carriers of the another symbol, and
means for establishing cumulated power sums from the power accumulation sums and the another power accumulated sums,

and the means for determining the power accumulation sum maximum comprises:

means for determining the power accumulation sum maximum of the cumulated power sums for indicating the current pilot carrier position.

20. A receiver according to claim 19, wherein the means for establishing another power accumulation sums comprises:

means for performing a first another power accumulation sum for first possible pilot carrier positions of the another symbol,
means for performing a second another power accumulation sum for second possible pilot carrier positions of the another symbol,
means for performing a third another power accumulation sum for third possible pilot carrier positions of the another symbol,
means for performing a fourth another power accumulation sum for fourth possible pilot carrier positions of the another symbol.

13

**21.** A receiver according to claim 19, wherein for the means for establishing cumulated power sums from the power accumulation sums and another power accumulation sums, the respective power accumulation sums of the first and the another symbol are adapted to be selected in such a way that the pilot carriers of the symbols have a correspondence for the respective sums.

**22.** A receiver according to claim 20, wherein means for establishing cumulated power sums from the power accumulation sums and the another power accumulated sums comprises:

> means for performing a first cumulated power sum for the first power accumulation sum of the first symbol and the fourth another power accumulation sum of the another symbol,
> means for performing a second cumulated power sum for the second power accumulation sum of the first symbol and the first another power accumulation sum of the another symbol,
> means for performing a third cumulated power sum for the third power accumulation sum of the first symbol and the second another power accumulation sum of the another symbol, and
> means for performing a fourth cumulated power sum for the fourth power accumulation sum of the first symbol and the third another power accumulation sum of the another symbol.

**23.** A receiver according to any one of the preceding claims, wherein the multi-carrier transmission comprises OFDM transmission using time slicing, the symbol comprises OFDM symbol and the plurality of carriers comprise data carriers and scattered pilot carriers.

**24.** A receiver according to any one of the preceding claims, wherein the multi-carrier transmission comprises time slicing based power saving based on bursts, and a synchronization of the receiver into the bursts is adapted to be based on the indicated pilot position for finding index of the received symbol.

**25.** A receiver according to any one of the preceding claims, wherein the multi-carrier transmission comprises DVB transmission using time slicing based on bursts, and synchronization into the bursts is adapted to be based on the indicated pilot position for finding an indication indicating the OFDM symbol.

**26.** A receiver according to any one of the preceding claims, wherein the receiver further comprises:

> a Fast Fourier Transform (FFT) means for FFT transformation of the received transmission for obtaining the symbol,
> accumulator means for accumulating power accumulation sum results, and
> Channel Estimation means (CHE) for further continuing the reception of the transmission.

**27.** A receiver according to any one of the preceding claims, wherein computational resources for performing the operations of at least one of the means comprises the same computational resources which are adapted to perform a post-FFT acquisition in the receiver.

**28.** A receiver according to any one of the preceding claims, wherein a buffer means of the receiver is adapted to contain all said means.

**29.** A mobile terminal for receiving a multi-carrier transmission, wherein the multi-carrier transmission comprises various symbols, each symbol comprising a plurality of carriers, the terminal comprising:

> means for accessing at least one symbol which is adapted to establish a distinguishable power based pattern for pilot carriers in the at least one symbol,
> means for establishing power accumulation sums for possible pilot carriers of the symbol based on the pattern, and
> means for determining a power accumulation sum maximum of the sums for indicating a pilot carrier position.

**30.** A sub-assembly of a terminal for receiving a multi-carrier transmission, wherein the multi-carrier transmission comprises various symbols, each symbol comprising a plurality of carriers, the sub-assembly comprising:

> means for accessing at least one symbol which is adapted to establish a distinguishable power based pattern for pilot carriers in the at least one symbol,
> means for establishing power accumulation sums for possible pilot carriers of the symbol based on the pattern, and

means for determining a power accumulation sum maximum of the sums for indicating a pilot carrier position.

31. A chipset for receiving a multi-carrier transmission, wherein the multi-carrier transmission comprises various symbols, each symbol comprising a plurality of carriers, the chipset comprising:

means for accessing at least one symbol which is adapted to establish a distinguishable power based pattern for pilot carriers in the at least one symbol,
means for establishing power accumulation sums for possible pilot carriers of the symbol based on the pattern, and
means for determining a power accumulation sum maximum of the sums for indicating a pilot carrier position.

32. A method for receiving a multi-carrier transmission, wherein the multi-carrier transmission comprises various symbols, each symbol comprising a plurality of carriers, the method having the steps of:

accessing at least one symbol which is adapted to establish a distinguishable power based pattern for pilot carriers in the at least one symbol,
establishing power accumulation sums for possible pilot carriers of the symbol based on the pattern, and
determining a power accumulation sum maximum of the sums for indicating a pilot carrier position.

33. A computer program comprising computer program code means adapted to perform the steps of claim 32 when said program is run on a computer.

34. A computer program product as claimed in claim 33 embodied on a computer readable medium.

**Patentansprüche**

1. Empfänger zum Empfangen einer Mehrträger-Übertragung, wobei die Mehrträger-Übertragung viele Symbole umfasst, wobei jedes Symbol mehrere Träger umfasst, und der Empfänger umfasst:

- Mittel zum Zugreifen auf mindestens ein Symbol, eingerichtet, ein unterscheidbares, Energie-basiertes Muster für Pilotträger in dem mindestens einem Symbol aufzubauen,
- Mittel zum Aufbauen von Energie-Akkumulations-Summen für mögliche Pilotträger der Symbole, basierend auf dem Muster, und
- Mittel zum Bestimmen eines Energie-Akkumulations-Summen-Maximums der Summen, um eine Pilotträger-Position anzugeben.

2. Empfänger nach Anspruch 1, wobei einer der möglichen Pilotträger eingerichtet ist, das Maximum gemäß dem vorbestimmten Muster für die Pilotträger innerhalb des Symbols zu umfassen.

3. Empfänger gemäß einem der vorhergehenden Ansprüchen, wobei die Position der möglichen Pilotträger eingerichtet ist, derart auf dem Muster zu basieren, dass Trägerindizes, die einen Pilot in einer Matrix einer bestimmten Anzahl von Symbolen aufweisen, eingerichtet sind, ausgewählt zu werden, und die entsprechende Trägerindexposition in dem Symbol, auf das zugegriffen wurde, entsprechend eingerichtet ist, ausgewählt zu werden.

4. Empfänger gemäß einem der vorhergehenden Ansprüche, wobei jeder vorbestimmte Träger des Symbols eingerichtet ist, für die Mittel zum Aufbauen der Energie-Akkumulations-Summen ausgewählt zu werden.

5. Empfänger nach Anspruch 4, wobei jeder vierte Träger des Symbols eingerichtet ist, für die Mittel zum Aufbauen der Energie-Akkumulations-Summen ausgewählt zu werden.

6. Empfänger nach Anspruch 1, wobei das unterscheidbare Energie-basierente Muster, verglichen mit Datenträgern des Symbols, angehoben Pilotträger umfasst.

7. Empfänger nach Anspruch 6, wobei die Piloten in der Amplitude, verglichen mit Datenträgern, zu 4/3 angehoben sind.

8. Empfänger nach Anspruch 1, wobei die Mittel zum Aufbauen von Energie-Akkumulations-Summen umfassen:

- Mittel zum Ausführen einer ersten Energie-Akkumulations-Summe für erste mögliche Pilotträger-Positionen des Symbols,
- Mittel zum Ausführen einer zweiten Energie-Akkumulations-Summe für zweite mögliche Pilotträger-Positionen des Symbols,
- Mittel zum Ausführen einer dritten Energie-Akkumulations-Summe für dritte mögliche Pilotträger-Positionen des Symbols,
- Mittel zum Ausführen einer vierten Energie-Akkumulations-Summe für vierte mögliche Pilotträger-Positionen des Symbols, und
- die Mittel zum Bestimmen umfassen:
- Mittel zum Erfassen des Werts des Energie-Akkumulations-Maximums aus der ersten, zweiten, dritten und vierten Energie-Akkumulations-Summe, um die derzeitige gestreute Pilotrasterposition anzugeben.

**9.** Empfänger nach Anspruch 8, wobei die erste Energie-Akkumulations-Summe eingerichtet ist, auf Grundlage folgender Formel berechnet zu werden:

$$- PS_1(n) = \sum_{p=0}^{p_{max}} S(n,12p+12) \cdot S*(n,12p+12),$$ wobei S(n,c) den c-te Unterträger des derzeitigen Symbols bezeichnet und $p_{max}$ von dem verwendeten Übertragungsmodus abhängt.

**10.** Empfänger nach Anspruch 8, wobei die zweite Energie-Akkumulations-Summe eingerichtet ist, auf Grundlage folgender Formel berechnet zu werden:

$$- PS_2(n) = \sum_{p=0}^{p_{max}} S(n,12p+3) \cdot S*(n,12p+3),$$ wobei S(n,c) den c-te Unterträger des derzeitigen Symbols bezeichnet und $p_{max}$ von dem verwendeten Übertragungsmodus abhängt.

**11.** Empfänger nach Anspruch 8, wobei die dritte Energie-Akkumulations-Summe eingerichtet ist, auf Grundlage folgender Formel berechnet zu werden:

$$- PS_3(n) = \sum_{p=0}^{p_{max}} S(n,12p+6) \cdot S*(n,12p+6),$$ wobei S(n,c) den c-te Unterträger des derzeitigen Symbols bezeichnet und $p_{max}$ von dem verwendeten Übertragungsmodus abhängt.

**12.** Empfänger nach Anspruch 8, wobei die vierte Energie-Akkumulations-Summe eingerichtet ist, auf Grundlage folgender Formel berechnet zu werden:

$$- PS_4(n) = \sum_{p=0}^{p_{max}} S(n,12p+9) \cdot S*(n,12p+9),$$ wobei S(n,c) den c-te Unterträger des derzeitigen Symbols bezeichnet und $p_{max}$ von dem verwendeten Übertragungsmodus abhängt.

**13.** Empfänger nach Anspruch 8, wobei die erste Energie-Akkumulations-Summe eingerichtet ist, auf Grundlage folgender Formel berechnet zu werden:

$$- PS_1'(n) = \sum_{p=0}^{p_{max}} S(n,12p) \cdot S*(n,12p),$$ wobei S(n,c) den c-te Unterträger des derzeitigen Symbols bezeichnet und $p_{max}$ von dem verwendeten Übertragungsmodus abhängt.

**14.** Empfänger nach Anspruch 8, wobei in den Mitteln zum Erfassen der Wert des Energie-Akkumulations-Maximums eingerichtet ist, auf folgender Formel zu basieren:

$PS_{max}(n) = max(PS_p(n)); p \in \{1,2,3,4\}$, wobei $PS_p(n)$ die erste, zweite, dritte und vierte Energie-Akkumulations-Summe bezeichnet, p eingerichtet ist, Pilotträger-Positionen zu bestimmen, um ein bestimmtes Symbol zu identifizieren, und
die derzeitige gestreute Pilotrasterposition (SPRP) eingerichtet ist, basierend auf folgender Formel gefunden zu werden:

$SPRP(n) = \arg\max_{p}(PS_p(n)); p \in \{1,2,3,4\}$, wobei $PS_p(n)$ die erste, zweite, dritte und vierte Energie-Akkumulations-Summe bezeichnet, p eingerichtet ist, Pilotträger-Positionen zu bestimmen, um ein bestimmtes Symbol zu identifizieren.

**15.** Empfänger nach Anspruch 1, wobei die Mittel zum Zugreifen umfassen:

- Mittel zum Erhalten eines ersten Symbols der Übertragung
- Mittel zum Erhalten eines anderen Symbols in Bezug auf das erste Symbol.

**16.** Empfänger nach Anspruch 15, wobei die Symbole, auf die zugegriffen wurde, ein derzeitig empfangenes Symbol und eine bestimmtes vorgegebenes anderes Symbol umfassen, welches dem derzeitig empfangenen Symbol vorhergeht oder folgt.

**17.** Empfänger nach Anspruch 15, wobei die Symbole, auf die zugegriffen wurde, ein derzeitig empfangenes Symbol und eine bestimmtes vorgegebenes anderes Symbol umfassen, welches dem derzeitig empfangenen Symbol vorhergeht oder folgt, so dass das entsprechende Muster eingerichtet ist, zwischen Pilotträgern der Symbole für mögliche Trägerpositionen innerhalb der Matrix der Symbole aufgebaut zu werden.

**18.** Empfänger nach einem der Ansprüche 15 bis 17, wobei das bestimmte vorgegebene andere Symbol ein Folgesymbol umfasst, welches dem derzeitig empfangenen Symbol vorhergeht oder folgt.

**19.** Empfänger nach Anspruch 15, wobei das Mittel zum Aufbauen von Energie-Akkumulations-Summen umfasst:

- Mittel zum Aufbauen von Energie-Akkumulations-Summen für mögliche Pilotträger des ersten Symbols, und der Empfänger weiter umfasst:

o Mittel zum Aufbauen von anderen Energie-Akkumulations-Summen für mögliche Pilotträger des anderen Symbols, und
o Mittel zum Aufbauen von kumulierten Energie-Summen für die Energie-Akkumulations-Summen und die anderen Energie-Akkumulations-Summen

- und die Mittel zum Bestimmen des Energie-Akkumulations-Summen-Maximums umfassen:

o Mittel zum Bestimmen des Energie-Akkumulations-Summen-Maximums der kumulierten Energiesummen, um die derzeitige Pilotträgerposition anzugeben.

**20.** Empfänger nach Anspruch 19, wobei die Mittel zum Aufbauen von anderen Energie-Akkumulations-Summen umfassen:

- Mittel zum Ausführen einer ersten anderen Energie-Akkumulations-Summe für erste mögliche Pilotträger-Positionen des anderen Symbols,
- Mittel zum Ausführen einer zweiten anderen Energie-Akkumulations-Summe für zweite mögliche Pilotträger-Positionen des anderen Symbols,
- Mittel zum Ausführen einer dritten anderen Energie-Akkumulations-Summe für dritte mögliche Pilotträger-Positionen des anderen Symbols,
- Mittel zum Ausführen einer vierten anderen Energie-Akkumulations-Summe für vierte mögliche Pilotträger-Positionen des anderen Symbols.

**21.** Empfänger nach Anspruch 19, wobei für die Mittel zum Aufbauen von kumulierten Energie-Summen aus den Energie-Akkumulations-Summen und den andern Energie-Akkumulations-Summen, wobei die entsprechenden Energie-Akkumulations-Summen des ersten und des anderen Symbols eingerichtet sind, derart ausgewählt zu werden, dass die Pilotträger der Symbole eine Übereinstimmung für die jeweiligen Summen haben.

**22.** Empfänger nach Anspruch 20, wobei die Mittel zum Aufbauen von kumulierten Energie-Summen aus den Energie-Akkumulations-Summen und den andern Energie-Akkumulations-Summen umfassen:

- Mittel zum Ausführen einer ersten kumulierten Energie-Summe für die erste Energie-Akkumulations-Summe des ersten Symbols und die vierte andere Energie-Akkumulations-Summe des anderen Symbols,
- Mittel zum Ausführen einer zweiten kumulierten Energie-Summe für die zweite Energie-Akkumulations-Summe des ersten Symbols und die erste andere Energie-Akkumulations-Summe des anderen Symbols,
- Mittel zum Ausführen einer dritten kumulierten Energie-Summe für die dritte Energie-Akkumulations-Summe des ersten Symbols und die zweite andere Energie-Akkumulations-Summe des anderen Symbols,
- Mittel zum Ausführen einer vierten kumulierten Energie-Summe für die vierte Energie-Akkumulations-Summe des ersten Symbols und die dritte andere Energie-Akkumulations-Summe des anderen Symbols.

23. Empfänger nach einem der vorhergehenden Ansprüche, wobei die Mehrträger-Übertragung OFDM- Übertragung unter Verwendung von Zeitscheibenverfahren umfasst, das Symbol OFDM-Symbole umfasst und die mehreren Träger Datenträger und gestreute Pilotträger umfassen.

24. Empfänger nach einem der vorhergehenden Ansprüche, wobei die Mehrträger-Übertragung ein auf Zeitscheibenverfahren basierendes Energiesparen basierend auf Bursts umfasst, und eine Synchronisation des Empfängers in die Bursts eingerichtet ist, auf der angegebenen Pilotposition zu basieren, um den Index des empfangenen Symbols zu finden.

25. Empfänger nach einem der vorhergehenden Ansprüche, wobei die Mehrträger-Übertragung eine DVB-Übertragung umfasst, die ein Zeitscheibenverfahren auf Grundlage von Bursts verwendet, und eine Synchronisation in die Bursts eingerichtet ist, auf der angegebenen Pilotposition zu basieren, um eine Angabe zu finden, die das OFDM-Symbol angibt.

26. Empfänger nach einem der vorhergehenden Ansprüche, wobei der Empfänger weiter umfasst:

- ein Mittel zur schnellen Fourier-Transformation (FFT) zur FFT-Transformation der empfangenen Übertragung, um die Symbol zu erhalten,
- Akkumulatormittel zum Akkumulieren von Energie-Akkumulations-Summen-Ergebnissen, und
- Kanal-Abschätz-Mittel (CHE), um den Empfang der Übertragung weiter fortzusetzen.

27. Empfänger nach einem der vorhergehenden Ansprüche, wobei die Berechnungs-Ressourcen zur Ausführung der Vorgänge von mindestens einem der Mittel die gleichen Berechnungs-Ressourcen umfassen, welche eingerichtet sind, eine Post-FFT-Akquisition in dem Empfänger auszuführen.

28. Empfänger nach einem der vorhergehenden Ansprüche, wobei ein Puffermittel des Empfängers eingerichtet ist, alle die Mittel zu enthalten.

29. Mobilendgerät zum Empfangen einer Mehrträger-Übertragung, wobei die Mehrträger-Übertragung viele Symbole umfasst, jedes Symbol mehrere Träger umfasst, und das Endgerät umfasst:

- Mittel zum Zugreifen auf mindestens ein Symbol, eingerichtet, ein unterscheidbares Energie-basiertes Muster für Pilotträger in dem mindestens einem Symbol aufzubauen,
- Mittel zum Aufbauen von Energie-Akkumulations-Summen für mögliche Pilotträger des Symbols, basierend auf dem Muster, und
- Mittel zum Bestimmen eines Energie-Akkumulationssummen-Maximums der Summen, um eine Pilotträger-Position anzugeben.

30. Untereinheit eines Endgeräts zum Empfangen einer Mehrträger-Übertragung, wobei die Mehrträger-Übertragung viele Symbole umfasst, jedes Symbol mehrere Träger umfasst, und die Untereinheit umfasst:

- Mittel zum Zugreifen auf mindestens ein Symbol, eingerichtet, ein unterscheidbares Energie-basiertes Muster für Pilotträger in dem mindestens einem Symbol aufzubauen,
- Mittel zum Aufbauen von Energie-Akkumulations-Summen für mögliche Pilotträger des Symbols, basierend auf dem Muster, und
- Mittel zum Bestimmen eines Energie-Akkumulationssummen-Maximums der Summen, um eine Pilotträger-Position anzugeben.

31. Chipsatz zum Empfangen einer Mehrträger-Übertragung, wobei die Mehrträger-Übertragung viele Symbole umfasst, jedes Symbol mehrere Träger umfasst, und der Chipsatz umfasst:

**EP 1 706 974 B1**

- Mittel zum Zugreifen auf mindestens ein Symbol, eingerichtet, ein unterscheidbares Energie-basiertes Muster für Pilotträger in dem mindestens einem Symbol aufzubauen,
- Mittel zum Aufbauen von Energie-Akkumulations-Summen für mögliche Pilotträger des Symbols, basierend auf dem Muster, und
- Mittel zum Bestimmen eines Energie-Akkumulationssummen-Maximums der Summen, um eine Pilotträger-Position anzugeben.

32. Verfahren zum Empfangen einer Mehrträger-Übertragung, wobei die Mehrträger-Übertragung viele Symbole umfasst, jedes Symbol mehrere Träger umfasst, und das Verfahren die Schritte aufweist:

- Zugreifen auf mindestens ein Symbol, eingerichtet, ein unterscheidbares Energie-basiertes Muster für Pilotträger in dem mindestens einem Symbol aufzubauen,
- Aufbauen von Energie-Akkumulations-Summen für mögliche Pilotträger des Symbols, basierend auf dem Muster, und
- Bestimmen eines Energie-Akkumulationssummen-Maximums der Summen, um eine Pilotträger-Position anzugeben.

33. Computer-Programm umfassend Computerprogramm-Codemittel, welche eingerichtet sind, die Schritte von Anspruch 32 durchzuführen, wenn das Programm auf einem Computer ausgeführt wird.

34. Computerprogramm-Produkt nach Anspruch 33, welches auf einem computerlesbaren Medium ausgeführt ist.

**Revendications**

1. Récepteur pour recevoir une émission multi-porteuse, dans lequel l'émission multi-porteuse comporte une multitude de symboles, chaque symbole comportant une pluralité de porteuses, le récepteur comportant :

un moyen en vue d'accéder à au moins un symbole qui est adapté pour établir un modèle distinctif basé sur une puissance pour des porteuses pilotes dans le au moins un symbole,
un moyen en vue d'établir des sommes d'accumulation de puissance pour des porteuses pilotes potentielles du symbole basé sur le modèle, et
un moyen en vue de déterminer un maximum de sommes d'accumulation de puissance des sommes en vue d'indiquer une position de porteuse pilote.

2. Récepteur selon la revendication 1, dans lequel l'une des porteuses pilotes potentielles est adaptée pour comporter le maximum selon le modèle prédéterminé pour les porteuses pilotes dans le symbole.

3. Récepteur selon l'une quelconque des revendications précédentes, dans lequel la position des porteuses pilotes potentielles est adaptée afin d'être basée sur le modèle d'une manière telle que des pointeurs de porteuse ayant une onde pilote dans une matrice d'un certain nombre de symboles sont adaptés afin d'être sélectionnés, et la position de pointeur de porteuse correspondante dans le symbole accédé est par conséquent adaptée pour être sélectionnée.

4. Récepteur selon l'une quelconque des revendications précédentes, dans lequel chaque porteuse prédéterminée du symbole est adaptée en vue d'être sélectionnée pour le moyen en vue d'établir les sommes d'accumulation de puissance.

5. Récepteur selon la revendication 4, dans lequel chaque quatrième porteuse du symbole est adaptée en vue d'être sélectionnée pour le moyen en vue d'établir les sommes d'accumulation de puissance.

6. Récepteur selon la revendication 1, dans lequel le modèle distinctif basé sur une puissance comporte des porteuses pilotes amplifiées en comparaison avec des porteuses de données du symbole.

7. Récepteur selon la revendication 6, dans lequel les ondes pilotes sont amplifiées en amplitude de 4/3 en comparaison aux porteuses de données.

8. Récepteur selon la revendication 1, dans lequel le moyen en vue d'établir des sommes d'accumulation de puissance

19

comporte :

un moyen en vue d'exécuter une première somme d'accumulation de puissance pour des premières positions de porteuses pilotes potentielles du symbole,
un moyen en vue d'exécuter une deuxième somme d'accumulation de puissance pour des deuxièmes positions de porteuses pilotes potentielles du symbole,
un moyen en vue d'exécuter une troisième somme d'accumulation de puissance pour des troisièmes positions de porteuses pilotes potentielles du symbole,
un moyen en vue d'exécuter une quatrième somme d'accumulation de puissance pour des quatrièmes positions de porteuses pilotes potentielles du symbole, et
le moyen de détermination comporte :

un moyen en vue de détecter l'amplitude de maximum d'accumulation de puissance à partir des première, deuxième, troisième, et quatrième sommes d'accumulation de puissance pour indiquer la position de trame d'onde pilote diffusée en cours.

9. Récepteur selon la revendication 8, dans lequel la première somme d'accumulation de puissance est adaptée pour être calculée sur la base de la formule ci-dessous :

$$PS_1(n) = \sum_{p=0}^{P\max} S(n, 12p + 12) \cdot S^*(n, 12p + 12),$$ où S(n,c) indique la c-ième sous-porteuse du sym-

bole en cours et $p_{max}$ dépend du mode d'émission utilisé.

10. Récepteur selon la revendication 8, dans lequel la deuxième somme d'accumulation de puissance est adaptée pour être calculée sur la base de la formule ci-dessous :

$$PS_2(n) = \sum_{p=0}^{P\max} S(n, 12p + 3) \cdot S^*(n, 12p + 3),$$ où S(n,c) indique la c-ième sous-porteuse du sym-

bole en cours et $p_{max}$ dépend du mode d'émission utilisé.

11. Récepteur selon la revendication 8, dans lequel la troisième somme d'accumulation de puissance est adaptée pour être calculée sur la base de la formule ci-dessous :

$$PS_3(n) = \sum_{p=0}^{P\max} S(n, 12p + 6) \cdot S^*(n, 12p + 6),$$ où S(n,c) indique la c-ième sous-porteuse du sym-

bole en cours et $p_{max}$ dépend du mode d'émission utilisé.

12. Récepteur selon la revendication 8, dans lequel la quatrième somme d'accumulation de puissance est adaptée pour être calculée sur la base de la formule ci-dessous:

$$PS_4(n) = \sum_{p=0}^{P\max} S(n, 12p + 9) \cdot S^*(n, 12p + 9)$$ où S(n,c) indique la c-ième sous-porteuse du sym-

bole en cours et $p_{max}$ dépend du mode d'émission utilisé.

13. Récepteur selon la revendication 8, dans lequel la première somme d'accumulation de puissance est adaptée pour être calculée sur la base de la formule ci-dessous :

$$PS_1{}'(n) = \sum_{p=0}^{P\max} S(n, 12p) \cdot S^*(n, 12p),$$ où S(n,c) indique la c-ième sous-porteuse du symbole en cours

et $p_{max}$ dépend du mode d'émission utilisé.

14. Récepteur selon la revendication 8, dans lequel le moyen en vue de détecter l'amplitude de maximum d'accumulation de puissance est adaptée pour être calculée sur la base de la formule ci-dessous :

$PS_{max}(n) = \max(PS_p(n))$ ; $P \in \{1,2,3,4\}$, ou $PS_p(n)$ indique les première, deuxième, troisième, et quatrième sommes d'accumulation de puissance, *p* est adapté pour déterminer des positions de porteuses pilotes pour identifier un certain symbole, et

la position de trame d'onde pilote diffusée en cours (SPRP) est adaptée pour être trouvée sur la base de la formule ci-dessous :

$$SPRP(\text{n}) = \arg \max_p (PS_p(n)) \; ; \; P \in \{1,2,3,4\},$$ où $PS_p(n)$ indique les première, deuxième, troisième, et quatrième sommes d'accumulation de puissance, *p* est adapté pour déterminer des positions de porteuses pilotes pour identifier un certain symbole.

**15.** Récepteur selon la revendication 1, dans lequel le moyen d'accès comporte :

un moyen en vue d'obtenir un premier symbole de l'émission,
un moyen en vue d'obtenir un autre symbole relativement au premier symbole.

**16.** Récepteur selon la revendication 15, dans lequel les symboles accédés comportent le symbole reçu en cours et un certain autre symbole prédéterminé précédent ou suivant le symbole en cours reçu.

**17.** Récepteur selon la revendication 15, dans lequel les symboles accédés comportent le symbole reçu en cours et un certain autre symbole prédéterminé précédent ou suivant le symbole reçu en cours de sorte que le modèle de correspondance soit adapté pour être établi entre des porteuses pilotes des symboles pour des positions de porteuses potentielles dans la matrice des symboles.

**18.** Récepteur selon l'une quelconque des revendications précédentes 15 - 17, dans lequel le certain autre symbole prédéterminé comporte un symbole consécutif précédent ou suivant le symbole en cours reçu.

**19.** Récepteur selon la revendication 15, dans lequel le moyen en vue d'établir des sommes d'accumulation de puissance comporte :

un moyen en vue d'établir des sommes d'accumulation de puissance pour des porteuses pilotes potentielles du premier symbole, et le récepteur comporte en outre :

un moyen en vue d'établir d'autres sommes d'accumulation de puissance pour des porteuses pilotes potentielles dudit un autre symbole, et
un moyen en vue d'établir des sommes de puissances cumulées à partir des sommes d'accumulation de puissance et des autres sommes de puissances cumulées,

et le moyen en vue de déterminer le maximum de sommes d'accumulation de puissance comporte :

un moyen en vue de déterminer le maximum de sommes d'accumulation de puissance des sommes de puissances cumulées pour indiquer la position de porteuse pilote en cours.

**20.** Récepteur selon la revendication 19, dans lequel le moyen en vue d'établir d'autres sommes d'accumulation de puissance comporte :

un moyen en vue d'exécuter une première autre somme d'accumulation de puissance pour des premières positions de porteuses pilotes potentielles dudit un autre symbole,
un moyen en vue d'exécuter une seconde autre somme d'accumulation de puissance pour des deuxièmes positions de porteuses pilotes potentielles dudit un autre symbole,
un moyen en vue d'exécuter une troisième autre somme d'accumulation de puissance pour des troisièmes positions de porteuses pilotes potentielles dudit un autre symbole,
un moyen en vue d'exécuter une quatrième autre somme d'accumulation de puissance pour des quatrièmes positions de porteuses pilotes potentielles dudit un autre symbole.

**21.** Récepteur selon la revendication 19, dans lequel pour le moyen en vue d'établir des sommes de puissances cumulées à partir des sommes d'accumulation de puissance et d'autres sommes d'accumulation de puissance, les sommes d'accumulation de puissance respectives du premier et dudit un autre symbole sont adaptées en vue d'être sélectionnées d'une manière telle que les porteuses pilotes des symboles ont une correspondance pour les sommes respectives.

**22.** Récepteur selon la revendication 20, dans lequel un moyen en vue d'établir des sommes de puissances cumulées à partir des sommes d'accumulation de puissance et des autres sommes accumulées de puissance comporte :

un moyen en vue d'exécuter une première somme de puissance cumulée pour la première somme d'accumulation de puissance du premier symbole et la quatrième autre somme d'accumulation de puissance dudit un autre symbole,
un moyen en vue d'exécuter une deuxième somme de puissance cumulée pour la deuxième somme d'accumulation de puissance du premier symbole et la première autre somme d'accumulation de puissance dudit un autre symbole,
un moyen en vue d'exécuter une troisième somme de puissance cumulée pour la troisième somme d'accumulation de puissance du premier symbole et la deuxième autre somme d'accumulation de puissance dudit un autre symbole, et
un moyen en vue d'exécuter une quatrième somme de puissance cumulée pour la quatrième somme d'accumulation de puissance du premier symbole et la troisième autre somme d'accumulation de puissance dudit un autre symbole.

**23.** Récepteur selon l'une quelconque des revendications précédentes, dans lequel l'émission multi-porteuse comporte une émission de multiplexage par répartition orthogonale de la fréquence (OFDM) utilisant un découpage de temps, le symbole comporte un symbole de multiplexage par répartition orthogonale de la fréquence (OFDM) et la pluralité des porteuses inclut des porteuses de données et des porteuses pilotes diffusées.

**24.** Récepteur selon l'une quelconque des revendications précédentes, dans lequel l'émission multi-porteuse comporte une économie de puissance basée sur un découpage de temps sur la base de rafales, et une synchronisation du récepteur dans les rafales est adaptée pour être basée sur la position d'onde porteuse indiquée pour trouver un pointeur du symbole reçu.

**25.** Récepteur selon l'une quelconque des revendications précédentes, dans lequel l'émission multi-porteuse comporte une émission par radiodiffusion vidéonumérique (DVB) utilisant un découpage de temps basé sur des rafales, et une synchronisation dans les rafales est adaptée pour être basée sur la position d'onde porteuse spécifiée pour trouver une indication montrant le symbole de multiplexage par répartition orthogonale de la fréquence (OFDM).

**26.** Récepteur selon l'une quelconque des revendications précédentes, dans lequel le récepteur comporte en outre :

un moyen de transformée de Fourrier rapide (FFT) pour une transformation FFT de l'émission reçue en vue d'obtenir le symbole,
un moyen d'accumulateur en vue d'accumuler des résultats de somme d'accumulation de puissance, et
un moyen d'estimation de canal (CHE) pour continuer la réception de l'émission.

**27.** Récepteur selon l'une quelconque des revendications précédentes, dans lequel des ressources de calcul informatique pour exécuter les opérations d'au moins l'un des moyens comportent les mêmes ressources de calcul informatique que celles qui sont adaptées pour exécuter une acquisition post FFT dans le récepteur.

**28.** Récepteur selon l'une quelconque des revendications précédentes, dans lequel un moyen de tampon du récepteur est adapté pour conserver la totalité desdits moyens.

**29.** Terminal mobile pour recevoir une émission multi-porteuse, dans lequel l'émission multi-porteuse comporte une multitude de symboles, chaque symbole comportant une pluralité de porteuses, le terminal comportant :

un moyen en vue d'accéder à au moins un symbole qui est adapté pour établir un modèle distinctif basé sur une puissance pour des porteuses pilotes dans le au moins un symbole,
un moyen en vue d'établir des sommes d'accumulation de puissance pour des porteuses pilotes potentielles du symbole basé sur le modèle, et
un moyen en vue de déterminer un maximum de sommes d'accumulation de puissance des sommes en vue d'indiquer une position de porteuse pilote.

**30.** Sous-ensemble d'un terminal pour recevoir une émission multi-porteuse, dans lequel l'émission multi-porteuse comporte une multitude de symboles, chaque symbole comportant une pluralité de porteuses, le sous-ensemble comportant :

un moyen en vue d'accéder à au moins un symbole qui est adapté pour établir un modèle distinctif basé sur une puissance pour des porteuses pilotes dans le au moins un symbole,
un moyen en vue d'établir des sommes d'accumulation de puissance pour des porteuses pilotes potentielles du symbole basé sur le modèle, et
un moyen en vue de déterminer un maximum de sommes d'accumulation de puissance des sommes pour indiquer une position de porteuse pilote.

**31.** Jeu de puces pour recevoir une émission multi-porteuse, dans lequel l'émission multi-porteuse comporte une multitude de symboles, chaque symbole comportant une pluralité de porteuses, le jeu de puces comportant :

un moyen en vue d'accéder à au moins un symbole qui est adapté pour établir un modèle distinctif basé sur une puissance pour des porteuses pilotes dans le au moins un symbole,
un moyen en vue d'établir des sommes d'accumulation de puissance pour des porteuses pilotes potentielles du symbole basé sur le modèle, et
un moyen en vue de déterminer un maximum de sommes d'accumulation de puissance des sommes pour indiquer une position de porteuse pilote.

**32.** Procédé pour recevoir une émission multi-porteuse, dans lequel l'émission multi-porteuse comporte une multitude de symboles, chaque symbole comportant une pluralité de porteuses, le procédé comportant les étapes consistant à :

accéder à au moins un symbole qui est adapté pour établir un modèle distinctif basé sur une puissance pour des porteuses pilotes dans le au moins un symbole,
établir des sommes d'accumulation de puissance pour des porteuses pilotes potentielles du symbole basé sur le modèle, et
déterminer un maximum de sommes d'accumulation de puissance des sommes en vue d'indiquer une position de porteuse pilote.

**33.** Produit informatique comportant un moyen de code de programme informatique adapté en vue d'exécuter les étapes de la revendication 32 lorsque ledit programme est exploité sur un ordinateur.

**34.** Produit programme informatique selon la revendication 33 intégré dans un support lisible par un ordinateur.

100    101

102    103    102    103

Prior art

Fig. 1

| 200 | | 201 | | 202 | | 203 |

Prior art

Fig. 2

Fig. 3

300'

**Fig. 4**

300"

301"
FFT

302"
Means for obtaining symbol

303"
Means for calculating a power accumulation for a certain carrier

304"
Means for storing calculation result

305"
Final index reached?

NO

YES

401'
Means for obtaining another symbol

303'"
Means for calculating a power accumulation for a certain carrier

304'"
Means for storing calculation result

305'"
Final index reached?

NO

YES

402'
Means for calculating cumulated power sums

306"
Means for determining highest magnitude

307"
CHE

## Fig. 5

Fig. 6

EP 1 706 974 B1

Fig. 7

Fig. 8

Fig. 9

EP 1 706 974 B1

Fig. 10

1101

1100

# Fig. 11